# EUROPÄISCHE PATENTSCHRIFT

(11) **EP 1 818 744 B1**
(45) Veröffentlichungstag und Bekanntmachung des Hinweises auf die Patenterteilung: **28.01.2009**
(21) Anmeldenummer: 06022040.7
(22) Anmeldetag: 20.10.2006
(51) Int. Cl.: G05B 19/19, G05B 19/404, G05B 19/416, G05B 11/00, G05B 13/02, B23Q 15/00, H02P 6/00

(54) **Reglerstruktur mit einem Torsionsmodell**
Controller structure with a torsion model
Structure de régulation comprenant un modèle de torsion

(30) Priorität: 10.02.2006 DE 102006006162
(43) Veröffentlichungstag der Anmeldung: 15.08.2007
(73) Patentinhaber: Dr. Johannes Heidenhain GmbH, 83301 Traunreut (DE)
(72) Erfinder: Kohler, Frieder, 83362 Lauter (DE); Wastlhuber, Bernhard, 83313 Siegsdorf (DE)

(56) Entgegenhaltungen:
- EP-A- 1 437 637
- EP-A1- 1 143 316
- US-A- 5 545 957
- US-B1- 6 470 225
- IHARA Y: "DYNAMIC PERFORMANCE OF MACHINE TOOLS WITH DIFFERENT POSITION FEEDBACK METHOD" SIGNALS, CIRCUITS AND SYSTEMS, 2003. SCS 2003. INTERNATIONAL SYMPOSIUM ON JULY 10-11, 2003, PISCATAWAY, NJ, USA,IEEE, 19. Mai 2003 (2003-05-19), Seiten 11-16, XP009084648 ISBN: 0-7803-7979-9

## Beschreibung

Die Erfindung betrifft eine Reglerstruktur. Solche Reglerstrukturen kommen z.B. in Numerischen Steuerungen zum Einsatz, mit deren Hilfe Positionieraufgaben in Werkzeugmaschinen gelöst werden. So kann etwa ein Werkzeug entlang einer programmierten Werkzeugbahn ein Werkstück bearbeiten.

In Numerischen Steuerungen kommen üblicherweise kaskadierte Reglerstrukturen zum Einsatz, die einen Lageregler, einen Drehzahl- oder Geschwindigkeitsregler und einen Stromregler aufweisen. Der vom Stromregler vorgegebene Strom wird als Sollstrom dem Antrieb der jeweiligen Achse der Werkzeugmaschine vorgegeben, um letztlich die gewünschten Bewegungen zu erzeugen.

Dabei ist es üblich, die Lage des zu positionierenden Objektes mit einem sehr genauen, am zu positionierenden Objekt angebrachten Positionsmessgerät zu erfassen, die Drehzahl des Antriebsmotors aber mit einem am Antrieb befindlichen Drehgeber. Durch die Elastizität der Mechanik zwischen Antrieb und Objekt kommt es zu Abweichungen zwischen der Lage bzw.

Geschwindigkeit des Objektes und der Lage bzw. Geschwindigkeit des beweglichen Teils im Antrieb, etwa durch Torsion einer Welle zwischen Antrieb und Objekt. Diese Abweichungen können im Regelkreis zu einem Schleppfehler führen, also z.B. zu einer Abweichung des Werkzeugs von der programmierten Werkzeugbahn.

Dieses Problem und einen möglichen Lösungsansatz beschreibt die EP 1437637 A2. Die Reglerstruktur ist hier insbesondere für den Fall, dass die aktuelle Geschwindigkeit am Antrieb, die aktuelle Lage aber direkt am zu positionierenden Objekt erfasst wird, relativ komplex.

Es sind z.B. aus der US 6 470 225 B1 auch Reglerstrukturen mit einer Vorsteuerung des Motorstromes bekannt, bei denen sowohl die Beschleunigung als auch die Reibung im zu regelnden System berücksichtigt sind. Bei dieser bekannten Vorsteuerung wird berücksichtigt, dass jede Beschleunigung des Objekts und jede Form von Reibung im System eine zusätzliche Kraft bzw. ein zusätzliches Drehmoment bedeutet, die bzw. das vom Antrieb aufgebracht werden muss. Diese zusätzliche Kraft bzw. dieses zusätzliche Drehmoment muss über einen zusätzlichen Strom im Antrieb erzeugt werden.

Aufgabe der Erfindung ist es, eine Reglerstruktur zu schaffen, mit der die durch die Elastizität der Mechanik zwischen Antrieb und Objekt verursachten Schleppfehler einer Werkzeugmaschine verringert oder weitestgehend vermieden werden können.

Diese Aufgabe wird gelöst durch eine Reglerstruktur mit den Merkmalen des Anspruches 1. Vorteilhafte Ausführungsformen ergeben sich aus den Merkmalen, die in den von Anspruch 1 abhängigen Ansprüchen aufgeführt sind.

So wird eine Reglerstruktur zur Lageregelung eines Objektes beschrieben, wobei das Objekt über eine Mechanik von einem Motor angetrieben ist. Die Reglerstruktur beseht aus einem Lageregler zum Bilden eines Drehzahlsollwertes aus einem Lagesollwert und einem Lageistwert, gefolgt von einem Drehzahlregler zum Bilden eines Stromsollwertes aus dem Drehzahlsollwert und einem Drehzahlistwert, sowie einer Schaltung zum Bilden eines Vorsteuerstromes aus dem Lagesollwert, wobei der Vorsteuerstrom dem Sollstromwert aufgeschaltet ist. Der Vorsteuerstrom ist außerdem einem Modell zur Torsionsvorsteuerung aufgeschaltet, dessen Ausgangssignal auf den Drehzahlsollwert aufgeschaltet ist.

Es sei an dieser Stelle erwähnt, dass am Ausgang des Drehzahlreglers statt eines Stromsollwertes auch ein Drehmomentsollwert ausgegeben werden kann, dem ein aus dem Lagesollwert abgeleitetes Vorsteuerdrehmoment aufgeschaltet ist. Da der Motorstrom und das vom Motor abgegebene Drehmoment über die Motorkonstante des Motors direkt proportional sind, besteht kein prinzipieller Unterschied zwischen diesen beiden Möglichkeiten. Wenn im Folgenden vom Stromsollwert und vom Vorsteuerstrom die Rede ist, so schließt dies immer auch die alternative Ausführungsform ein, nach der einem vom Drehzahlregler abgegebenen Drehmomentsollwert ein Vorsteuerdrehmoment aufgeschaltet ist, bzw. nach der ein Vorsteuerdrehmoment dem Modell zur Torsionsvorsteuerung aufgeschaltet ist.

Das Modell zur Torsionsvorsteuerung besteht aus einem Differenzierer zum Bilden der ersten Ableitung des Vorsteuerstromes, sowie einem Multiplizierer, in dem diese erste Ableitung des Vorsteuerstromes mit einem Faktor multipliziert wird. Über diesen Faktor ist das Modell zur Torsionsvorsteuerung besonders einfach einstellbar, so dass es für einen Anwender einfach ist, die Reglerstruktur passend für die jeweilige Anwendung zu parametrieren. Schleppfehler lassen sich so effektiv reduzieren oder ganz vermeiden.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: eine Reglerstruktur nach dem Stand der Technik,
- Figur 2: eine Reglerstruktur mit Torsionskompensation.

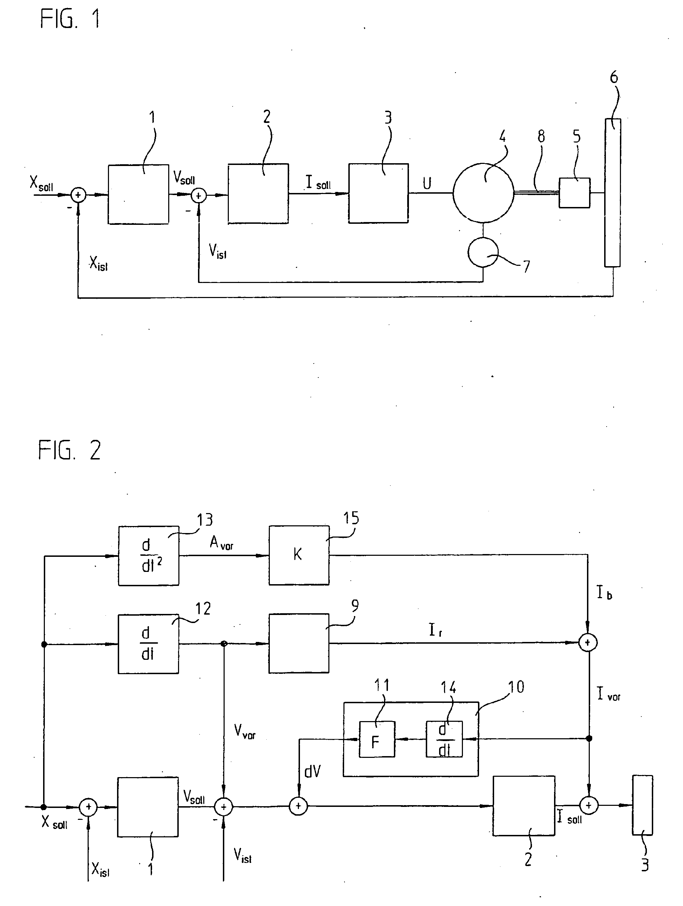

Figur 1 zeigt eine vereinfacht dargestellte Reglerstruktur nach dem Stand der Technik. Die Differenz aus einem Lagesollwert Xsoll und einem Lageistwert Xist wird einem Lageregler 1 zugeführt. Der Lagesollwert Xsoll kann z.B. aus einem Teileprogramm einer Numerischen Steuerung entnommen werden, anhand dessen programmierter Werkzeugbahn eine Bearbeitung eines Werkstückes geschehen soll. Der Lageistwert Xist wird hier anhand eines Längenmessgerätes 6 gewonnen, das die Lage eines Objektes 5 in der zu regelnden Achsrichtung erfasst. Die zu regelnde Längsverschiebung des Objektes 5 wird dabei von einem Antrieb oder Motor 4 bewerkstelligt, der mit dem Objekt 5 über eine Mechanik 8 verbunden ist. Diese Mechanik wird eine gewisse Elastizität aufweisen, so dass Geschwindigkeit und Lage des Motors 4 und des Objektes 5 nicht notwendigerweise immer einander entsprechen.

Der Lageregler 1 gibt ein Signal entsprechend eines Drehzahlsollwertes Vsoll ab, von dem der Drehzahlistwert Vist abgezogen wird. Der Drehzahlistwert Vist wird mittels eines Drehgebers 7 direkt am Motor 4 erfasst. Beim Drehgeber 7 kann es sich um einen Geschwindigkeitsgeber handeln, oder um einen Positionsgeber mit einer nachfolgenden Bildung der ersten Ableitung des Positionswertes.

Im hier beschriebenen Ausführungsbeispiel handelt es sich um einen rotatorischen Motor 4 und eine translatorische Bewegung des Objektes 5. Die Lage und die Drehzahl des Motors 4 sind über die Mechanik 8 mit der Lage und der Geschwindigkeit des Objektes 5 verknüpft. Insofern entspricht einer bestimmten Drehzahl des Motors 4 eine bestimmte Geschwindigkeit des Objektes 5, gleiches gilt für die Lage von Motor 4 und Objekt 5. Durch die Elastizität der Mechanik 8 treten allerdings nichtlineare Effekte auf, die bei einer genauen Positionsregelung des Objektes 5 berücksichtigt werden müssen.

Die Differenz aus dem im Lageregler 1 gebildeten Drehzahlsollwert Vsoll und dem am Motor 4 erfassten Drehzahlistwert Vist wird einem Drehzahlregler 2 zugeführt, der daraus einen Stromsollwert Isoll bildet. Dieser Stromsollwert Isoll wird einem Stromregler 3 zugeführt, der diese Vorgabe mittels eines Verstärkers in eine entsprechende Spannung U für den Motor 4 umsetzt.

Natürlich kann das Objekt 5 statt einer translatorischen auch eine rotatorische Bewegung ausführen. Die grundsätzliche Reglerstruktur ändert sich dadurch nicht, es ändern sich nur die Einheiten von Lagesollwert Xsoll und Lageistwert Xist. In jedem Fall werden die Lage des Objektes 5 und die Drehzahl des Motors 4 von unterschiedlichen Messsystemen 6, 7 erfasst.

Die Figur 2 zeigt eine Reglerstruktur ähnlich der bereits beschriebenen, mit den Elementen Lageregler 1, Drehzahlregler 2 und Stromregler 3, ergänzt um eine Vorsteuerung für die Drehzahl und den Strom, sowie einem speziellen Zweig zur Berücksichtung der Torsionseffekte, die durch die Elastizität der Mechanik 8 im Regelkreis auftreten.

So bildet ein erster Differenzierer 12 einen Geschwindigkeitsvorsteuerwert Vvor durch Ableitung des Lagesollwertes Xsoll. Dieser Geschwindigkeitsvorsteuerwert Vvor wird der Sollgeschwindigkeit Vsoll aufgeschaltet, und zusätzlich einem Modell 9 für die Reibungssvorsteuerung zugeführt. Dieses Modell 9 sollte sowohl Haftreibung als auch Gleitreibung berücksichtigen, und damit in der Lage sein zu erkennen, ob sich das Objekt 5 aktuell bewegt oder still steht. Es berechnet anhand von Geschwindigkeitsvorsteuerwerten Vvor und hinterlegten Parametern die aktuelle Reibung im System. Solche Modelle 9 sind in der Literatur ausführlich beschrieben.

In einem zweiten Differenzierer 13 wird die zweite Ableitung des Lagesollwertes 9 gebildet, wodurch man einen Beschleunigungsvorsteuerwert Avor erhält, der sich, in einem ersten Multiplizierer 15 mit einem Parameter K multipliziert, ebenso wie der Ausgang des Modells 9 für die Reibungsvorsteuerung zur Vorsteuerung des Stromes eignet. Der Ausgang des Modells 9 und der Ausgang des ersten Multiplizierers 15 werden daher addiert und als Vorsteuerstrom Ivor dem Sollstrom Isoll aufgeschaltet.

Sowohl der Geschwindigkeitsvorsteuerwert Vvor als auch der Vorsteuerstrom lvor haben die Aufgabe, bei einer Änderung des Lagesollwertes Xsoll absehbare Änderungen der Drehzahl und des Stromes ohne Verzögerungen in den Regelkreis einzuspeisen.

Der Vorsteuerstrom Ivor ist nun ebenso wie z.B. die Torsion einer Welle in der Mechanik 8 abhängig von der Beschleunigung (proportional zur zweiten Ableitung des Lagesollwertes XsoII) und der Reibung (proportional zur ersten Ableitung des Lagesollwertes XsoII).

Daher wird vorgeschlagen, den Vorsteuerstrom lvor einem Modell 10 zur Torsionsvorsteuerung aufzuschalten. Dieses Modell kann sehr einfach aufgebaut sein und gemäß Figur 2 lediglich einen dritten Differenzierer 14 zur Bildung der ersten Ableitung des Vorsteuerstromes Ivor enthalten, sowie einen zweiten Multiplizierer 11, in dem ein Faktor F mit der ersten Ableitung des Vorsteuerstromes Ivor multipliziert wird. Das dann am Ausgang des Modells 10 zur Torsionsvorsteuerung anliegende Ausgangssignal dV ist als zusätzliche Geschwindigkeitsvorsteuerung dem Geschwindigkeitssollwert Vsoll aufgeschaltet. Diese Aufschaltung kann vor oder (wie in Figur 2 dargestellt) nach der Differenzbildung aus Geschwindigkeitssollwert Vsoll und Geschwindigkeitsistwert Vist geschehen, oder auch durch Subtraktion des Ausgangswertes dV vom Geschwindigkeitsistwert Vist.

Versuche haben gezeigt, dass sich mit einer solchen Reglerstruktur mit einer aus dem Vorsteuerstrom Ivor abgeleiteten Torsionskompensation sehr effektiv Schleppfehler unterdrücken lassen, wie sie in Maschinen mit großer Elastizität in der Mechanik 8 auftreten.

Die Parametrierung des Modells 10 zur Torsionskompensation gestaltet sich dabei recht einfach: Während einer mit konstanter Geschwindigkeit in eine Richtung durchgeführten langsamen Bewegung des Objektes 5 wird die Positionsdifferenz zwischen dem Längenmessgerät 6 und dem Drehgeber 7 festgestellt und mit der Differenz während einer langsamen Bewegung in die entgegen gesetzte Richtung verglichen. Der Unterschied zwischen beiden Werten ist der Torsion in der Mechanik 8 proportional, die sich bei der im System herrschenden Reibung und der zur Überwindung dieser Reibung nötigen Kraft (bzw. dem nötigen Moment) einstellt. Daraus lässt sich der optimale Faktor F für das Modell 10 zur Torsionssteuerung berechnen und z.B. als Parameter in der Numerischen Steuerung der Werkzeugmaschine ablegen, in der die Reglerstruktur realisiert ist.

## Patentansprüche

1. Reglerstruktur zur Lageregelung eines Objektes (5), das über eine Mechanik (8) von einem Motor (4) angetrieben ist, mit einem Lageregler (1) zum Bilden eines Drehzahlsollwertes (Vsoll) aus einem Lagesollwert (Xsoll) und einem Lageistwert (Xist), gefolgt von einem Drehzahlregler (2) zum Bilden eines Stromsollwertes (Isoll) aus dem Drehzahlsollwert (Vsoll) und einem Drehzahlistwert (Vist), sowie einer Schaltung (9, 12, 13) zum Bilden eines Vorsteuerstromes (Ivor) aus dem Lagesollwert (Xsoll), wobei der Vorsteuerstrom (Ivor) dem Sollstromwert (Isoll) aufgeschaltet ist, **dadurch gekennzeichnet, dass** der Vorsteuerstrom (Ivor) außerdem einem Modell (10) zur Torsionsvorsteuerung aufgeschaltet ist, dessen Ausgangssignal (dV) auf den Drehzahlsollwert (Vsoll) aufgeschaltet ist.

2. Reglerstruktur nach Anspruch 1, **dadurch gekennzeichnet, dass** die Schaltung zum Bilden des Vorsteuerstromes (Ivor) einen ersten Differenzierer (12) enthält, der eine erste Ableitung (Vvor) des Lagesollwerts (Xsoll) bildet, sowie einen zweiten Differenzierer, der eine zweite Ableitung (Avor) des Lagesollwertes (Xsoll) bildet.

3. Reglerstruktur nach Anspruch 2, **dadurch gekennzeichnet, dass** die erste Ableitung (Vvor) des Lagesollwerts (Xsoll) als Geschwindigkeitsvorsteuerung (Vvor) auf den Drehzahlsollwert (Vsoll) geschaltet ist.

4. Reglerstruktur nach Anspruch 2 oder 3, **dadurch gekennzeichnet, dass** die erste Ableitung (Vvor) des Lagesollwerts (Xsoll) zusätzlich auf ein Modell (9) für Haft- und Gleitreibung im Bereich des Motors (4), der Mechanik (8) und des Objektes (5) geschaltet ist.

5. Reglerstruktur nach Anspruch 4, **dadurch gekennzeichnet, dass** die zweite Ableitung (Avor) des Lagesollwertes. (Xsoll) in einem ersten Multiplizierer (15) mit einem Faktor (K) multipliziert und der Ausgang (Ib) des ersten Multiplizierers (15) zum Ausgang (Ir) des Modells (9) für Haft- und Gleitreibung addiert ist, um den Vorsteuerstrom (Ivor) zu bilden.

6. Reglerstruktur nach einem der vorhergehenden Ansprüche, **dadurch gekennzeichnet, dass** der Vorsteuerstrom (Ivor) im Modell (10) zur Torsionsvorsteuerung einem dritten Differenzierer (14) aufgeschaltet ist, der eine erste Ableitung des Vorsteuerstromes (Ivor) bildet.

7. Reglerstruktur nach Anspruch 6, **dadurch gekennzeichnet, dass** die erste Ableitung des Vorsteuerstromes (Ivor) einem zweiten Multiplizierer (11) aufgeschaltet ist, in dem diese erste Ableitung des Vorsteuerstromes (Ivor) mit einem parametrierbaren Faktor (F) multiplikativ verknüpft ist, wodurch der Drehzahlkorrekturwert (dV) am Ausgang des Modells (10) zur Torsionsvorsteuerung gebildet ist.

## Claims

1. Controller structure for controlling the position of an object (5) which is driven by a motor (4) via a mechanism (8), with a position controller (1) for generating a rotational speed setpoint value (Vsoll) from a position setpoint value (Xsoll) and a position actual value (Xist), followed by a rotational speed controller (2) for generating a current setpoint value (Isoll) from the rotational speed setpoint value (Vsoll) and a rotational speed actual value (Vist), as well as a circuit (9, 12, 13) for generating a pilot current (Ivor) from the position setpoint value (Xsoll), wherein the pilot current (Ivor) is fed forward to the setpoint current value (Isoll), **characterized in that** the pilot current (Ivor) is additionally fed forward to a model (10) for torsion pilot control, the output signal (dV) of which is fed forward to the rotational speed setpoint value (Vsoll).

2. Controller structure according to Claim 1, **characterized in that** the circuit for generating the pilot current (Ivor) contains a first differentiator (12) which generates a first derivative (Vvor) of the position setpoint value (Xsoll), as well as a second differentiator which generates a second derivative (Avor) of the position setpoint value (Xsoll).

3. Controller structure according to Claim 2, **characterized in that** the first derivative (Vvor) of the position setpoint value (Xsoll) is fed forward to the rotational setpoint value (Vsoll) as a speed pilot control (Vvor).

4. Controller structure according to Claim 2 or 3, **characterized in that** the first derivative (Vvor) of the position setpoint value (Xsoll) is additionally fed forward to a model (9) for static and sliding friction in the region of the motor (4), the mechanism (8) and the object (5).

5. Controller structure according to Claim 4, **characterized in that** the second derivative (Avor) of the position setpoint value (Xsoll) is multiplied in a first multiplier (15) by a factor (K) and the output (Ib) of the first multiplier (15) is added to the output (Ir) of the model (9) for static and sliding friction, in order to generate the pilot current (Ivor).

6. Controller structure according to any one of the preceding claims, **characterized in that** the pilot current (Ivor) in the model (10) for torsion pilot control is fed forward to a third differentiator (14) which generates a first derivative of the pilot current (Ivor).

7. Controller structure according to Claim 6, **characterized in that** the first derivative of the pilot current (Ivor) is fed forward to a second multiplier (11), in which this first derivative of the pilot current (Ivor) is multiplicatively linked with a parameterizable factor (F), as a result of which the rotational speed correction value (dV) is generated at the output of the model (10) for torsion pilot control.

## Revendications

1. Structure de régulateur pour le réglage de position d'un objet (5), qui est entraîné au moyen d'un mécanisme (8) par un moteur (4), comprenant un régulateur de position (1) pour la formation d'une valeur théorique de régime (Vsoll) à partir d'une valeur théorique de position (Xsoll) et d'une valeur réelle de position (Xist), suivi d'un régulateur de régime (2) pour la formation d'une valeur théorique de courant (Isoll) à partir de la valeur théorique de régime (Vsoll) et d'une valeur réelle de régime (Vist), ainsi qu'un circuit (9, 12, 13) pour la formation d'un courant de commande pilote (Ivor) à partir de la valeur théorique de position (Xsoll), le courant de commande pilote (Ivor) étant axé sur la valeur de courant théorique (Isoll), **caractérisée en ce que** le courant de commande pilote (Ivor) est axé d'autre part sur un modèle (10) pour la commande pilote de torsion, dont le signal de sortie (dV) est axé sur la valeur théorique de régime (Vsoll).

2. Structure de régulateur selon la revendication 1, **caractérisée en ce que** le circuit pour la formation du courant de commande pilote (Ivor) contient un premier différentiateur (12) qui forme une première dérivée (Vvor) de la valeur théorique de position (Xsoll), et un second différentiateur qui forme une seconde dérivée (Avor) de la valeur de positon théorique (Xsoll).

3. Structure de régulateur selon la revendication 2, **caractérisée en ce que** la première dérivée (Vvor) de la valeur théorique de position (Xsoll) en tant que commande pilote de vitesse (Vvor) est axée sur la valeur théorique de régime (Vsoll).

4. Structure de régulateur selon la revendication 2 ou 3, **caractérisée en ce que** la première dérivée (Vvor) de la valeur théorique de position (Xsoll) est axée en supplément sur un modèle (9) pour le frottement d'adhérence et le frottement de glissement dans la zone du moteur (4), du mécanisme (8) et de l'objet (5).

5. Structure de régulateur selon la revendication 4, **caractérisée en ce que** la seconde dérivée (Avor) de la valeur théorique de position (Xsoll) est multipliée dans un premier multiplicateur (15) par un facteur (K) et la sortie (Ib) du premier multiplicateur (15) est ajoutée à la sortie (Ir) du modèle (9) pour le frottement d'adhérence et le frottement de glissement pour former le courant de commande pilote (Ivor).

6. Structure de régulateur selon l'une quelconque des revendications précédentes, **caractérisée en ce que** le courant de commande pilote (Ivor) est axé dans le modèle (10) pour la commande pilote de torsion sur un troisième différentiateur (14) qui forme une première dérivation du courant de commande pilote (Ivor).

7. Structure de régulateur selon la revendication 6, **caractérisée en ce que** la première dérivée du courant de commande pilote (Ivor) est axée sur un second multiplexeur (11) dans lequel cette première dérivée du courant de commande pilote (Ivor) est associée par multiplication avec un facteur (F) paramétrable, de sorte que la valeur de correction de régime (dV) est formée à la sortie du modèle (10) pour la commande pilote de torsion.
